# EUROPEAN PATENT SPECIFICATION

(11) **EP 3 197 829 B1**
(45) Date of publication and mention of the grant of the patent: **06.11.2024**
(21) Application number: 15816254.5
(22) Date of filing: 24.09.2015
(51) Int. Cl.: C01B 25/26, C01B 25/45, C04B 41/87, C04B 35/447, C04B 35/626, B22C 3/00, C03C 17/23, C01B 25/37, B22D 41/02, C04B 35/622, C04B 35/634, C04B 41/00, C04B 41/50, C04B 111/00

(54) **RARE EARTH PHOSPHATE BASED NON REACTIVE AND NON-WETTABLE SURFACES**
SELTENERDEPHOSPHATE AUF DER BASIS VON NICHT REAKTIVEN UND NICHTBENETZBAREN OBERFLÄCHEN
SURFACE NON RÉACTIVE ET NON MOUILLABLE À BASE DE PHOSPHATES DE TERRES RARES POUR MÉTAUX EN FUSION

(30) Priority: 24.09.2014 IN 2737DE2014
(43) Date of publication of application: 02.08.2017
(73) Proprietor: Council of Scientific and Industrial Research, New Delhi, Maharashtra 110001 (IN)
(72) Inventor: SASHIDHARAN, Sankar, Thiruvananthapuram 695019 (IN); KOMBAN, Rajesh, Thiruvananthapuram 695019 (IN); MOHAMED, Abdul Azeez Peer, Thiruvananthapuram 695019 (IN); ANATHAKUMAR, Solaiappan, Thiruvananthapuram 695019 (IN); HAREESH, Unnikrishnan Nair Saraswathy, Thiruvananthapuram 695019 (IN); WARRIER, Krishna Gopakumar, Thiruvananthapuram 695019 (IN)
(74) Representative: Pfenning, Meinig & Partner mbB
(86) International application number: PCT/IN2015/050120
(87) International publication number: WO 2016/046849

(56) References cited:
- US-A- 3 317 319
- US-A- 6 036 762
- US-A1- 2007 131 906
- US-B1- 6 863 999
- ANNE-LAURE PÉNARD ET AL: "Luminescent Sol-Gel Coatings Based on Nanophosphors", MRS ONLINE PROCEEDINGS LIBRARY, 1 January 2007 (2007-01-01), XP055248268, Retrieved from the Internet <URL:http://journals.cambridge.org/download.php?file=/OPL/OPL988/S1946427400061819a.pdf&code=35a72eccc2a551103592b187924f0996> [retrieved on 20160208], DOI: 10.1557/PROC-988-0988-QQ03-16
- VALÉRIE BUISSETTE ET AL: "Colloidal Synthesis of Luminescent Rhabdophane LaPO 4 :Ln 3+ . x H 2 O (Ln = Ce, Tb, Eu; x ~ 0.7) Nanocrystals", CHEMISTRY OF MATERIALS, vol. 16, no. 19, 1 September 2004 (2004-09-01), US, pages 3767 - 3773, XP055248271, ISSN: 0897-4756, DOI: 10.1021/cm049323a
- ANONYMOUS: "Beschichten - Wikipedia", 19 July 2014 (2014-07-19), XP055248374, Retrieved from the Internet <URL:https://web.archive.org/web/20140719112128/http://de.wikipedia.org/wiki/Beschichten> [retrieved on 20160208]

## Description

### FIELD OF THE INVENTION

The present invention relates to the development of rare earth phosphate based non-reactive and non-wettable surface for molten metals. Particularly, present invention relates to rare earth phosphate based surface as non-reactive and non-wettable for molten metals for high temperature applications such as mould release coatings for metal casting.

### BACKGROUND OF THE INVENTION

Rare earth phosphates possess excellent high temperature phase stability, low thermal conductivity and diffusivity, good corrosion resistance and high thermal expansion coefficient. By virtue of these characteristics, lanthanum phosphate, a member of the rare earth phosphates family, has been employed for applications as thermal barrier coatings to metallic substrates. It is considered as a potential material for thermal insulation coating on Ni-based superalloys as its properties are comparable to the properties of zirconia like high-temperature stability (melting point 2345 ± 20 K), high thermal expansion and low thermal conductivity. In addition, lanthanum phosphate (LaPO₄ ) is expected to have good corrosion resistance in environments containing sulfur and vanadium salts. However a careful control of the LaPO₄ stoichiometry is essential to employ such materials as TBCs primarily due to the fact that LaPO₄ is a line compound that melts congruently and small deviations from stoichiometry change its solidus temperature from 2343 K to 1853 K on the La-rich side or to 1323 K on the P-rich side.

Conventional solid state reactions of lanthanum phosphate necessitate high temperatures for phase formation and are also characterised by particles of irregular size and shape due to which post preparative milling techniques are required. In view of this a host of solution based preparative techniques like sol gel, co-precipitation, hydrothermal, sonochemical methods are now been developed to synthesise lanthanum phosphate particles of controlled size, morphology and composition. However, the bulk production of such particles is based on a spray calcination procedure where in the sol is atomised and fed into a heated chamber leading to the formation of particles with desirable characteristics.

In the patent US6863999 B1 lanthanum phosphate is used to form thermal barrier coatings to protect super alloy and ceramic parts exposed to high temperature and damage by sulfur, vanadium, phosphorus and other contaminants. The coatings, between 10 and 500 micrometers in thickness, can be deposited on substrates having temperatures between 750- 950° C by common application methods such as EB-PVD, laser ablation and plasma spraying. The most effective coatings are crystalline and show a columnar structure with feather-like microstructure.

The patent US5858465A describes a method to coat SiC and oxide fibers with phosphate coatings to enhance the ceramic or metal matrix reinforcing properties of fibers. The phosphate coatings applied with the described method can also be employed for encapsulating radioactive waste. The patent US 6,190,780 B1 (2001) reveals a means of surface treatment of metals for corrosion resistance where the coating layers are composed of rare earth elements of cerium and lanthanum in a resin. A colloidal dispersion containing rhabdophane structured rare earth phosphate and a polyphosphate is disclosed by US patent 2007/0131906. The said dispersion was used to develop transparent luminescent material. A corrosion protecting coating composition, for steel and aluminium surfaces, comprising of rare earth based corrosion inhibitors with a resin and curing agent was invented by the patent US 2005/0215670 A1.

US 7122581 B1 reveals a process for cerium and/or lanthanum phosphate sol by introducing a first solution of salts of at least one of the rare earths into a second solution of phosphate ions with an initial pH of less than 2 and controlling the pH of the precipitation at a constant value of less than 2. The precipitate separated from the reaction medium can be further dispersed in water with a final PO₄/rare earth mole ratio of 1. The sol is employed as polishing suspensions

US 3 317 319 A discloses the deposition of adherent, fine-textured layers of particles onto a substrate and particularly to the making of mosaic-type phosphor screens for cathode ray tubes.

P6nard, A.-L., et al. (MRS Online Proceedings Library, 2007, DOI: 10.1557/PROC-988-0988-QQ03-16) discloses a process for obtaining nanoparticles of lathanide vanadate and phosphate by aqueous synthesis, wherein the obtained nanoparticles are stabilized in colloidal suspensions and deposited in sol-gel films by spin-coating using a silicate as inorganic binder.

In metal casting operations the moulds are usually coated with layers of release agents comprising mainly of inorganic materials like alumina, zirconia, hexagonal BN, graphite etc. The layers acting as an interfacial coating prevents chemical interaction with mould material and casting metal. It is beneficial and advantageous to identify and develop suitable mould release agents that are easy to synthesize and are relatively of low costs compared to existing prior art articles

### SUMMARY OF INVENTION

The invention is set out in the appended set of claims. Accordingly, present invention provides a process for obtaining a rare earth phosphate based, non-reactive and non-wettable surface for molten metals for high temperature applications, comprising the steps of:
i. adding rare earth phosphate nanorod powders in water and/or solvent to obtain a slurry having solid loading in the range of 1-75wt%;
ii. incorporating binders and plasticizers in to the slurry as obtained in step (i) to prepare a formulation;
iii. spraying or dipping the formulation as obtained in step (ii) on a surface to obtain a rare earth phosphate based non-reactive and non-wettable surface,
wherein the binders used are selected from the group consisting of polyvinyl alcohol, methyl cellulose, ethyl cellulose, and poly vinyl pyrrolidone, and wherein the plasticizers used are selected from the group consisting of polyethylene glycol and dioctyl phthalate.

In an embodiment of the present invention, the rare earth phosphate used is a single rare earth element or a mixture of rare earth elements derived from thorium depreciated monazite sand.

In another embodiment of the present invention, the surface used is selected from the group consisting of glass, metals and ceramics.

In yet another embodiment of the present invention, the solvent used is an organic solvent and is ethanol or isopropanol.

According to the present invention, the binders used are selected from the group consisting of polyvinyl alcohol, methyl cellulose, ethyl cellulose, and poly vinyl pyrrolidone.

According to the present invention, the plasticizers used are selected from the group consisting of polyethylene glycol and dioctyl pthalate.

In yet another embodiment of the present invention, the rare earth phosphate based, non-reactive and non-wettable surface is in the form of a coating, a mould or a paint.

In yet another embodiment of the present invention, said non reactive coating, mould or paint is suitable for holding the molten metal without chemically reacting at the melting temperatures of the molten metal for 2-5 h.

In yet another embodiment of the present invention, the molten metal is either alone or in combination with alloys, metal composites, transition metals and semi-metals, wherein the molten metal is iron, aluminium, silver or zinc.

In yet another embodiment of the present invention, the formulation as prepared in step (ii) is suitable as a paint.

In an embodiment of the present disclosure, which is no embodiment of the present invention, the slurry as prepared in step (i) is useful in coating of crucibles/containers and the said process comprising the steps of:
i. casting the slurry as obtained in step (i) of claim 1 to monoliths in the form of cylindrical crucibles of varying volumes in suitable porous moulds;
ii. drying the monoliths and sintering the dried shapes in the temperature range of 1350-1550°C to obtain rare earth phosphate based non-reactive and non-wettable crucibles/containers.

In yet another embodiment of the present disclosure, which is no embodiment of the present invention, the surface is made of a dispersion (sol/slurry) containing ReP particles wherein the smallest dimension of the particles are in the range between 1nm and 10 microns and wherein any dimension of majority of the particles have sizes in the range between 10nm and 1micron and wherein the particles have a rod like structure with an aspect ratio value in the range of 1-100.

In yet another embodiment of the present disclosure, which is no embodiment of the present invention, dispersion/sols/slurrys are made in to the form of mould relase coating sprays/solutions.

### BRIEF DESCRIPTION OF DRAWINGS

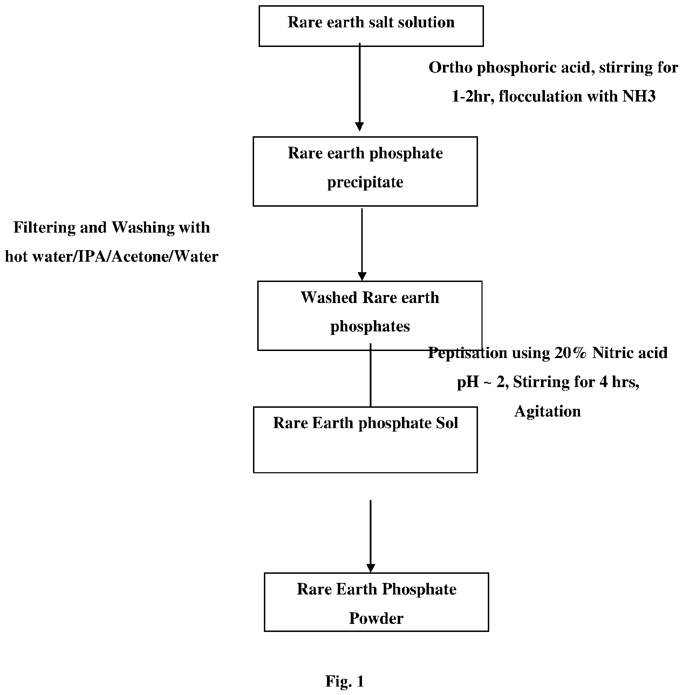

- Fig. 1:: Flow chart of the mixed rare earth phosphate powder preparation.

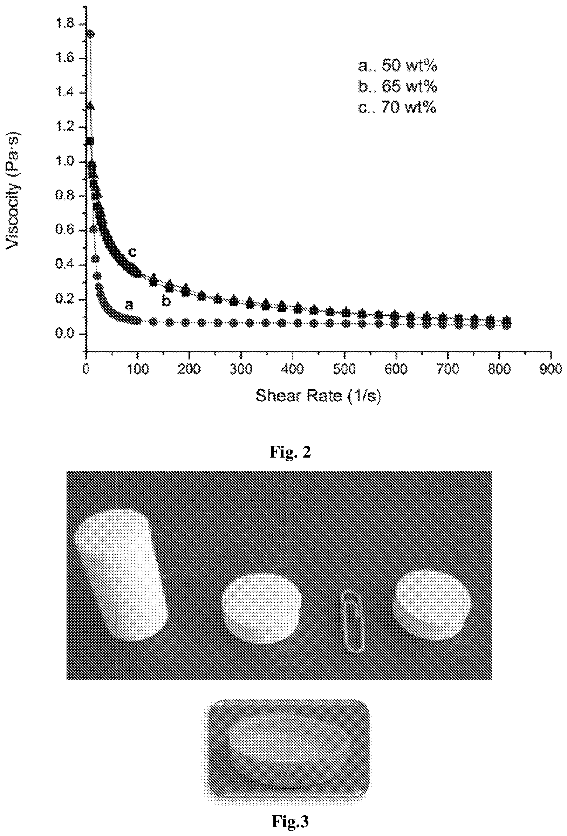

- Fig. 2:: Viscosity vs. shear rate of slurries with varying solid loading for casting.
- Fig.3:: Free standing lanthanum phosphate monolith prepared by the casting process.

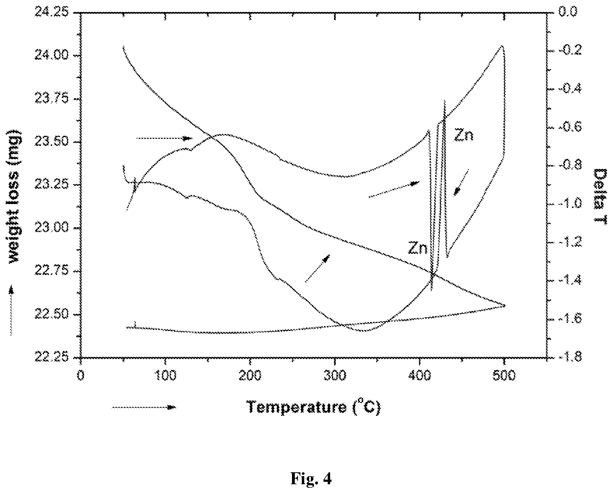

- Fig.4:: TG-DTA pattern of the powder mixture containing lanthanum phosphate and zinc metal.

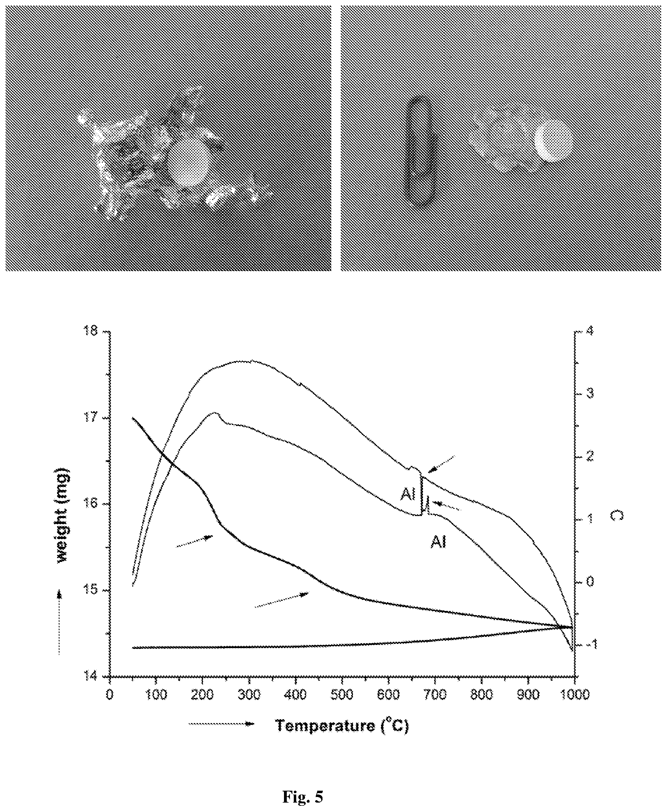

- Fig.5:: TG-DTA pattern of the powder mixture containing lanthanum phosphate and aluminium metal.

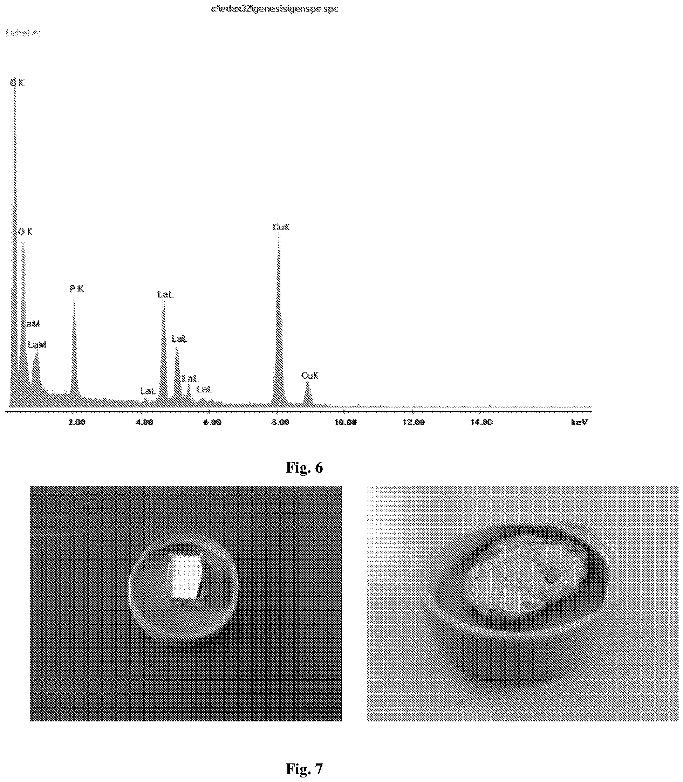

- Fig 6:: EDAX spectrum of lanthanum phosphate powders after heat treatment at temperatures greater than 750°C.
- Fig 7:: Free standing lanthanum phosphate article after melting operations with aluminium metal.

### DETAILED DESCRIPTION OF THE INVENTION

The present disclosure relates to the process of preparation of rare earth phosphate based non-reactive and non-wettable surface for molten metals for high temperature applications such as mould release coatings or crucibles for metal casting and the said process comprising the steps of:
i. adding rare earth phosphate nanorod powders in water and/or organic solvents like ethanol, isopropanol to obtain a slurry having solid loading in the range of 1-30wt%
ii. Preparation of paint formulations based on the aqueous slurry or sprayable formulations based on aqueous/organic slurry by incorporating suitable binders and plasticizers.
iii. Spray/Dip coating rare earth phosphate layers on substrates of glass, metals and ceramics.
iv. Melting of metals like Zn, Al, Ag in the rare earth phosphate coated monoliths and holding at the melting temperatures for 2-5 h
v. adding lanthanum phosphate nanorod powders in water to obtain an aqueous slurry having solid loading in the range of 60 to to 75 wt %;
vi. casting the slurry as obtained in step (ii) to monoliths in the form of cylindrical crucibles of varying volumes in suitable porous moulds;
vii. drying the monoliths and sintering the dried shapes in the temperature range of 1350-1550°C to obtain crucibles/containers
viii. Melting of metals like Zn, Al, Ag in the lanthanum phosphate containers and holding at the melting temperatures for 2-5 h.

The present invention also relates to the dispersion of lanthanum phosphate in the form of nanorods in aqueous medium with use of suitable dispersants to arrive at coating formulation that can be applied to substrates by the methods of dipping, spraying and casting.

The present disclosure also relates to the shaping of lanthanum phosphate dispersions in aqueous media to shaped monoliths of varying sizes and shape followed by the drying and sintering of the same to impart mechanical strength.

The present disclosure also demonstrates the suitability of such monoliths as metal melting crucibles without any reaction between each other.

The present invention also demonstrates the suitability of coatings developed from lanthanum phosphate as mould release agents in metal melting applications.

Lanthanum phosphate sample of the present invention prepared by slurry based colloidal forming technique of casting is demonstrated to be non wetting and non reacting to molten metals of zinc and aluminium. Additionally, coatings of rare earth phosphate prepared from a paint formulation in aqueous medium and coated to substrates of ceramics and metal is also shown to be non reactive of molten metals.

In metal casting operations, the mould walls are generally coated with release agents to prevent corrosion of the mould wall with molten metal and also to prevent the adherence of cast part on to the mould walls. The release agents thus facilitate easy release of cast part from the moulds. The prior art of mould release coatings is based on materials like hexagonal boron nitride, graphite etc which provide an interfacial layer between the mould and cast part. The present disclosure introduces rare earth phosphate based compositions as suitable materials for non-reactivity and non-wettability with molten metals like zinc and aluminium. Rare earth phosphate based powders dispersed in aqueous medium can be applied as coatings on suitable moulds for the casting purpose. Alternatively, lanthanum phosphate based rare earth phosphate containers in the form of crucibles can be obtained from the aqueous dispersions of adequate solid loading and can be used directly for casting simple shapes of metal.

The process begins with the preparation of rare earth phosphates like lanthanum phosphate powders by a modified sol gel process. Solutions of lanthanum salts in water at molar concentrations in the range 0.01 to 0.1 are treated with orthophosphoric acid at 25-35°C. The precipitate thus obtained is subjected to a flocculation procedure at pH 7 and further washed repeatedly with water to free of the chloride/nitrate ions. The washed precipitate is then peptized to a sol at pH 2. The sol is then calcined to obtain powders of typically nanorod morphology with lengths up to 1 micron and width of 10-15 nm.

According to one aspect of the invention, the powder is made into a paint formulation with appropriate solid loading by employing suitable binders and plasticizers and coated to containers currently employed in foundry for molten metal casting. The coated crucibles are dried under controlled humidity conditions to ensure crack free film formation and further heat treated at temperatures greater than 800°C. The coated foundry crucibles thus obtained can be employed for molten metal casting operations wherein the coating layer is non-wetting and non-reactive to molten metals.

According to another aspect of disclosure, monoliths of lanthanum phosphate in the form of crucibles for example, can be cast from aqueous slurry of the powder with solid loading in the range of 60 to 75 wt%. The powder is dispersed in water under controlled pH conditions and milled appropriately with alumina milling media for 5-15 hrs. Slurry is further deaired and poured onto plaster of paris moulds in a slip casting procedure. After sufficient buildup of thickness the excess slurry is drained and the cast shape is subjected to ambient air drying until they are released from the moulds. The dried monoliths after an oven drying at 80°C is then subjected to sintering at temperatures varying in the range of 1300-1600°C. Crack free sintered crucibles of lanthanum phosphate are thus obtained and can be directly employed for molten metal casting operations

The disclosure more specifically relates to the synthesis and dispersion of lanthanum phosphate powders in an aqueous medium followed by its shaping to monoliths by slip casting and sintering to perform as non-reactive containers for molten metal casting. In another embodiment the aqueous /organic dispersions of rare earth phosphates with suitable solid loading and binders can perform as paint/spray formulations for application as coatings on other glass, ceramic and metallic substrates. Another embodiment of the disclosure relates to the non-wettability of such monoliths and coatings with molten metals at their respective melting temperatures.

### EXAMPLES

Following examples are given by way of illustration and therefore should not be construed to limit the scope of the invention. Among the following examples, Example 4 is no example according to the invention, but helpful to understand certain aspects thereof.

### EXAMPLE I

### Preparation of lanthanum phosphate nanorods powder

In a typical synthesis for 20g Lanthanum Phosphate, 37.0198 g Lanthanum nitrate was initially dissolved in 1710 ml de-mineralized water to form lanthanum nitrate hexahydrate. Lanthanum phosphate was precipitated by adding the phosphate source 88% ortho phosphoric Acid (5.44 ml) drop by drop and the precipitate formed is further flocculated by addition of 25% ammonia solution and pH was raised to 7. The precipitate was then washed with luke warm water. The washed precipitate was then filtered and redispersed in de-mineralized water and further peptized to form lanthanum phosphate sol (pH 2) using 20% nitric acid with continuous, vigorous stirring to obtain the sol. The stability of the sol is checked using zeta potential measurement.

### Example 2

In another example, mixture of rare earth nitrates comprising the elements of La, Pr, Sm and Ce was dissolved in demineralized water and treated with stoichiometric amounts to precipitate the rare earth phosphate mixture. The precipitate was treated as mentioned in example 1 and made into a sol containing the mixture of rare earth phosphates.

### Example

### Example 3

### Coating of lanthanum phosphate nanorods powder

The sols thus obtained in example land 2 was mixed with poly vinyl alcohol, sprayed or coated over surfaces and annealed to get coatings.

### Example 4 (no Example according to the invention)

### Preparation of Containers /Monoliths

Lanthanum Phosphate precipitated from Lanthanum salt by adding ortho phosphoric acid is further flocculated by addition of 25% ammonia solution till the pH was maintained between 6.8 -7.8.The precipitate thus obtained was washed, dried and calcined at 1000-1200°C to obtain Lanthanum phosphate powders. The powders were then dispersed in water at pH 2 and ball milled for 6-12 h using alumina as milling medium. 1-2 drops of octanol was added to the suspension to prevent foaming. The slurry after deairing was slip cast to shapes of crucibles and containers using Plaster of Paris moulds. After the build-up of sufficient thickness the slip cast part was de-moulded and dried at 80°C under controlled conditions of humidity and temperature (50°C and 65-75% RH) and further under normal oven conditions for 15 h at 80°C. The dried monolith is then sintered in the temperature range 1300-1500°C and the crack free monoliths thus obtained are used for aluminum metal casting.

### ADVANTAGES OF THE INVENTION

- Rare earth phosphate based non-reactive surfaces obtained by the process described in this invention provides non-reactive, non-wetting characteristics towards molten metals. This property enables the development of mould release coatings in metallurgical industry for casting operations
- The formulations thus developed substitute the highly expensive material of boron nitride used commonly for the said purposes
- The dispersibility of powders in aqueous/organic media enables the formation of paintable/sprayable formulations conducive for industrial environments compared to physical/chemical vapour deposition processes that require sophisticated instrumentation
- The developed powders are also amenable to environmentally benign colloidal forming techniques that promote monolith fabrication
- The non-wettability and non-reactive nature of the surfaces enable repeated use of containers and helps in minimum material losses when used for precious metal castings of gold and silver.

## Claims

1. A process for obtaining a rare earth phosphate based, non-reactive and non-wettable surface for molten metals for high temperature applications, comprising the steps of:
i. adding rare earth phosphate nanorod powders in water and/or solvent to obtain a slurry having solid loading in the range of 1-75 wt%;
ii. incorporating binders and plasticizers in to the slurry as obtained in step (i) to prepare a formulation;
iii. spraying or dipping the formulation as obtained in step (ii) on a surface to obtain a rare earth phosphate based, non-reactive and non-wettable surface;
wherein the binders are selected from the group consisting of polyvinyl alcohol, methyl cellulose, ethyl cellulose, and polyvinyl pyrrolidone, and
wherein the plasticizers are selected from the group consisting of polyethylene glycol and dioctyle phthalate.

2. The process as claimed in claim 1, wherein the rare earth phosphate used is a single rare earth element or a mixture of rare earth elements derived from thorium depreciated monazite sand.

3. The process as claimed in claim 1, wherein the surface used is selected from the group consisting of glass, metals and ceramics.

4. The process as claimed in claim 1, wherein the solvent used is an organic solvent and is ethanol or isopropanol.

5. The process as claimed in claim 1, wherein the rare earth phosphate based, non-reactive and non-wettable surface is in the form of a coating, a mould or a paint.

6. The process as claimed in claim 1 and 4, wherein the formulation as prepared in step (ii) is suitable as a paint.

## Patentansprüche

1. Verfahren zur Gewinnung einer nicht reaktiven und nicht benetzbaren Oberfläche auf Seltenerdphosphatbasis für geschmolzene Metalle für Hochtemperaturanwendungen, das die folgenden Schritte aufweist:
I. Zugeben von Seltenerdphosphat-Nanostäbchenpulvern in Wasser und/oder Lösungsmittel, um eine Aufschlämmung mit einer Feststoffbeladung im Bereich von 1-75 Gew.-% zu gewinnen;
II. Einarbeiten von Bindemitteln und Weichmachern in die in Schritt (i) gewonnene Aufschlämmung zur Bereitstellung einer Formulierung;
III. Aufsprühen oder Eintauchen der in Schritt (ii) gewonnenen Formulierung auf eine Oberfläche, um eine nicht reaktive und nicht benetzbare Oberfläche auf Seltenerdphosphatbasis zu gewinnen;
wobei die Bindemittel aus der Gruppe ausgewählt sind, die aus Polyvinylalkohol, Methylcellulose, Ethylcellulose und Polyvinylpyrrolidon besteht, und
wobei die Weichmacher aus der Gruppe ausgewählt sind, die aus Polyethylenglykol und Dioctylphthalat besteht.

2. Verfahren nach Anspruch 1, wobei das verwendete Seltenerdphosphat ein einzelnes Seltenerdelement oder ein Gemisch von Seltenerdelementen ist, erlangt aus thoriumabgeschiedenem Monazitsand.

3. Verfahren nach Anspruch 1, wobei die verwendete Oberfläche aus der Gruppe ausgewählt ist, die aus Glas, Metallen und Keramiken besteht.

4. Verfahren nach Anspruch 1, wobei das verwendete Lösungsmittel ein organisches Lösungsmittel ist und Ethanol oder Isopropanol ist.

5. Verfahren nach Anspruch 1, wobei die nicht reaktive und nicht benetzbare Oberfläche auf Seltenerdphosphatbasis in Form einer Beschichtung, eines Formkörpers oder eines Anstrichs vorliegt.

6. Verfahren nach Anspruch 1 und 4, wobei die in Schritt (ii) bereitgestellte Formulierung als Anstrichstoff geeignet ist.

## Revendications

1. Procédé pour obtenir une surface à base de phosphate de terres rares, non réactive et non mouillable pour des métaux en fusion pour des applications à haute température, comprenant les étapes consistant à :
I. ajouter des nanopoudres de phosphate de terres rares dans de l'eau et/ou un solvant pour obtenir une suspension épaisse présentant une charge en solides dans la plage de 1 à 75 % en poids ;
II. incorporer des liants et des plastifiants dans la suspension épaisse telle qu'obtenue à l'étape (i) pour préparer une formulation ;
III. pulvériser ou tremper la formulation telle qu'obtenue à l'étape (ii) sur une surface pour obtenir une surface à base de phosphate de terres rares, non réactive et non mouillable ;
dans lequel les liants sont choisis dans le groupe comprenant l'alcool polyvinylique, la méthylcellulose, l'éthylcellulose et la polyvinylpyrrolidone, et
dans lequel les plastifiants sont choisis dans le groupe comprenant le polyéthylène glycol et le phtalate de dioctyle.

2. Procédé selon la revendication 1, dans lequel le phosphate de terres rares utilisé est un élément de terres rares unique ou un mélange d'éléments de terres rares dérivé de sable de monazite déprécié au thorium.

3. Procédé selon la revendication 1, dans lequel la surface utilisée est choisie dans le groupe comprenant le verre, les métaux et les céramiques.

4. Procédé selon la revendication 1, dans lequel le solvant utilisé est un solvant organique et est l'éthanol ou l'isopropanol.

5. Procédé selon la revendication 1, dans lequel la surface à base de phosphate de terres rares, non réactive et non mouillable est sous la forme d'un revêtement, d'un moule ou d'une peinture.

6. Procédé selon les revendications 1 et 4, dans lequel la formulation telle que préparée à l'étape (ii) convient comme peinture.
